# FASCICULE DE BREVET EUROPEEN

(11) **EP 4 278 077 B1**
(45) Date de publication et mention de la délivrance du brevet: **26.11.2025**
(21) Numéro de dépôt: 21852040.1
(22) Date de dépôt: 20.12.2021
(51) Int. Cl.: F02C 7/26, F02C 7/262, F02C 7/266

(54) **PROCÉDÉ ET DISPOSITIF D'ALLUMAGE**
ZÜNDVERFAHREN UND -VORRICHTUNG
IGNITION METHOD AND DEVICE

(30) Priorité: 15.01.2021 FR 2100369
(43) Date de publication de la demande: 22.11.2023
(73) Titulaire: Safran Helicopter Engines, 64510 Bordes (FR)
(72) Inventeur: BONDIVENNE, Eric Michel, 77550 Moissy-Cramayel (FR); POUMAREDE, Vincent, 77550 Moissy-Cramayel (FR)
(74) Mandataire: Cabinet Camus Lebkiri
(86) Numéro de dépôt international: PCT/FR2021/052409
(87) Numéro de publication internationale: WO 2022/152989

(56) Documents cités:
- WO-A2-2014/133643
- BE-A- 837 177
- FR-A1- 3 019 215
- FR-A1- 3 092 147
- GB-A- 1 154 641
- US-A- 3 469 398

## Description

### DOMAINE TECHNIQUE DE L'INVENTION

Le domaine technique de l'invention est celui des moteurs à combustion continue, comme par exemple les turbomoteurs aéronautiques et plus particulièrement ceux utilisés pour les hélicoptères. L'invention se rapporte en particulier aux dispositifs et aux procédés d'allumage de ces moteurs.

### ARRIERE-PLAN TECHNOLOGIQUE DE L'INVENTION

L'allumage est classiquement fait grâce à un Boîtier Haute Énergie (BHE) qui permet le claquage d'étincelles au niveau d'une ou plusieurs bougies d'allumage, situées dans la chambre de combustion. Le BHE est alimenté par le réseau électrique du véhicule hôte. Lorsqu'il s'agit d'un premier démarrage au sol, cette alimentation n'est effective qu'à partir du moment où l'ensemble des accessoires de démarrage sont également alimentés (démarreur, électrovanne carburant). À partir de l'instant où l'alimentation commence, l'électronique du BHE se charge jusqu'à atteindre un niveau d'énergie suffisant pour provoquer le claquage des bougies (induit par la rigidité diélectrique du milieu ambiant). Un ordre de grandeur réaliste du temps de charge d'un BHE est 0,5 s. Aucune inflammation de combustible n'est possible pendant le temps de charge. Le BHE (et plus précisément son condensateur) est chargé grâce à un dispositif élévateur de tension à semi-conducteurs alimenté par le réseau de bord 28V de l'aéronef. Cela permet d'atteindre les hautes tensions nécessaires au claquage de la bougie de l'ordre de quelques kV.

Le document FR3092147 A1 divulgue un système d'allumage selon l'art antérieur.

Par ailleurs, dans le cas où l'aéronef comporte plusieurs moteurs, au moins un moteur peut dans certaines phases de vol, être mis dans un état dit de veille, dans lequel le démarreur reste sous tension, mais l'alimentation en carburant est coupée. Le moteur doit alors pouvoir être redémarré en urgence (sortie du mode de veille par activation d'urgence dans le cadre du concept 'SEO' *Single Engine Operation,* ...). Le redémarrage consiste alors principalement à rouvrir l'électrovanne de carburant et enflammer le combustible. Dans ce contexte, le temps de charge du BHE pour claquer les étincelles devient un paramètre particulièrement critique.

### RESUME DE L'INVENTION

L'invention offre une solution aux problèmes évoqués précédemment, en permettant un démarrage plus rapide, en préparant le boitier haute énergie en avance, en vue d'un démarrage ou d'un redémarrage, permettant de réduire le temps entre l'instant où un ordre de démarrage ou redémarrage moteur est reçu et
- le moment où l'allumage est effectif pour les chambres à fenêtre d'allumage réduite,
- le moment où le moteur est apte à fournir sa puissance pour les applications de démarrage rapide ou Fast-Restart.

Le procédé d'allumage selon l'invention s'applique à un moteur à combustion continue comprenant un organe électronique de contrôle du moteur, un boitier haute énergie, un circuit d'allumage à bougies et une électrovanne de carburant, coopérant avec un démarreur, ledit procédé étant caractérisé en ce qu'il est mis en œuvre par l'organe électronique de contrôle du moteur et qu'il comporte une étape précharge du boitier haute énergie avant une étape de démarrage moteur activée sur ordre de démarrage moteur, ladite étape de précharge étant commandée:
- par une mise sous tension de l'organe électronique de contrôle du moteur ou
- sur mise en veille du moteur dans lequel le démarreur reste sous tension, le générateur de gaz est maintenu en rotation à basse vitesse grâce au démarreur et l'électrovanne de carburant est fermée.

Lors du premier démarrage (premier cas de figure), l'organe électronique de contrôle du moteur est d'abord mis sous tension, puis le démarreur et le boitier haute énergie sont mis sous tension et l'électrovanne de carburant est commandée à l'état ouvert pour alimenter le moteur en carburant. Pendant que le boitier haute énergie se charge, la pression monte dans les chambres de combustion, l'organe électronique de contrôle du moteur permet une synchronisation en donnant l'ordre de démarrage lorsque la pression est suffisante dans les chambres et que le BHE est chargé.

Pour un redémarrage (deuxième cas de figure), le moteur est mis en veille, c'est-à-dire que le démarreur est maintenu sous tension, que le générateur de gaz est maintenu en rotation à basse vitesse grâce au démarreur et que l'électrovanne de carburant est fermée. Pendant cette mise en veille, le BHE se charge, l'étape de démarrage pourra alors être activée.

La mise sous tension du BHE se fait par l'intermédiaire d'un premier interrupteur. Dans le premier cas de figure, correspondant à un premier démarrage du moteur, le boitier haute énergie est alimenté en électricité pendant que le démarreur fait monter la pression dans la chambre et que l'électrovanne de carburant est ouverte ce qui permet de le charger en temps masqué. Dans le deuxième cas de figure, correspondant à la mise en veille du moteur, on met à profit le temps de veille moteur pour charger et maintenir en charge le BHE, ce qui permet d'optimiser (raccourcir) le temps nécessaire à l'allumage du moteur en situation d'urgence.

Le procédé selon l'invention permet de contrôler deux modes de fonctionnement du BHE : un mode de précharge et un mode opérationnel, de claquage. Le mode de précharge est initié avec la mise sous tension du calculateur du moteur, lorsqu'il s'agit d'un premier démarrage ; ou avec le passage du moteur en mode de veille et il s'agit alors de se préparer à un redémarrage futur ; dans les deux cas, le passage du BHE du mode de précharge au mode opérationnel de claquage est activé par l'ordre de démarrage ou de redémarrage.

Habituellement, en aéronautique, le BHE comprend un circuit de génération de la haute tension à partir de l'alimentation basse tension fournie par le réseau de bord, qui comprend un étage élévateur de tension alimentant un étage de stockage d'énergie, capacitif, et un tube de décharge à gaz (GDT). Le circuit d'allumage à bougies comprend les bougies et le tube de décharge à gaz (GDT) associé à un étage électronique de puissance qui développe la haute tension appliquée sur les électrodes des bougies lors du claquage du tube à décharge. Autrement dit le claquage du tube à gaz de décharge assure le claquage des bougies d'allumage. De manière connue, le tube à décharge permet d'homogénéiser les conditions de claquage des bougies en fournissant une haute tension adaptée quelles que soient les conditions atmosphériques dans la chambre de combustion du moteur.

Le procédé de démarrage selon l'invention permet par exemple d'obtenir :
- Un maintien à un niveau de charge (total ou partiel élevé) en mode de veille du moteur où un redémarrage d'urgence peut être requis pour permettre un redémarrage d'urgence dans un temps optimal.
- Une anticipation totale de la charge du BHE en temps masqué avant l'ordre de démarrage ou redémarrage du moteur,
- Une anticipation partielle de la charge du BHE en temps masqué avant l'ordre de démarrage ou redémarrage du moteur,
- Une anticipation partielle de la charge du BHE en temps masqué permettant une synchronisation avec les autres facteurs contribuant au démarrage, lors d'un premier démarrage (Vitesse d'entraînement par le démarreur, arrivée du combustible, ...)

On acquiert ainsi une indépendance du délai d'allumage vis-à-vis du temps d'établissement de la tension de sortie du BHE, à un niveau de tension de claquage prédéterminé. Le gain de temps sur le claquage de la première étincelle peut atteindre 80 à 90 % du temps de charge du BHE, soit typiquement 0,4 à 0,45 s. Ce gain de temps entre la commande du BHE et l'obtention de la 1ère étincelle permet d'améliorer de façon notable la performance de la fonction de rallumage automatique des moteurs mis en veille, ce qui est particulièrement important pour les situations nécessitant un redémarrage d'urgence pour sortir du mode de vol SEO.

Selon un aspect de l'invention, l'étape de précharge comprend une sous étape de mesure d'une tension de sortie U du boitier haute énergie et une sous étape de commande d'ouverture ou de fermeture d'un premier interrupteur contrôlant l'alimentation du boitier haute énergie en fonction de la tension de sortie U du boitier haute énergie. On entend par tension de sortie du boitier haute énergie BHE, la tension à l'entrée du tube de décharge à gaz, c'est-à-dire la tension aux bornes de l'élément de stockage d'énergie. L'organe électronique de contrôle du moteur pourra être constitué du calculateur de contrôle du moteur (communément appelé FADEC pour Full-Authority Digital Engine Controls); ou bien être constitué par d'un ensemble composé d'un circuit électronique dédié du BHE et du calculateur de contrôle du moteur, le circuit électronique étant piloté par le calculateur de contrôle du moteur. Le premier interrupteur est commandé par l'organe électronique de contrôle moteur qui mesure la tension de sortie U du boitier haute énergie et commande le premier interrupteur en fonction d'une tension de consigne. L'organe électronique de contrôle moteur pourra ainsi ouvrir ou fermer le premier interrupteur en fonction du niveau de tension de sortie du boitier haute énergie BHE, pour atteindre et conserver la tension de consigne.

Selon une première variante, le premier interrupteur s'ouvre quand la tension de sortie U devient supérieure ou égale à une tension de consigne U_{précharge} strictement inférieure à une tension de claquage U_{claquage}. La tension de consigne est une fraction d'une tension de claquage, celle-ci étant la tension nécessaire pour produire une étincelle. Ainsi l'alimentation électrique du boitier haute énergie s'arrête dès que U dépasse U_{précharge}, avec U_{précharge} égal à k U_{claquage}, k réel strictement compris entre 0,9 et 1, de préférence compris entre 0,95 et 0,98 bornes incluses. Lorsque le moteur est en état de veille, le temps d'allumage à compter d'un ordre de redémarrage moteur sera raccourci puisque le BHE n'aura besoin que d'une charge complémentaire pour arriver au niveau de tension de claquage requis pour l'allumage. Dans le cas d'un premier démarrage, cela facilite la synchronisation des accessoires de démarrage.

On a expliqué précédemment que le BHE comprend généralement un tube à décharge de gaz (GDT) et la tension de claquage nécessaire est la tension de claquage du tube à décharge de gaz qui est placé avant les bougies. La tension de claquage du GDT est typiquement 1800 Volts ou plus, et jusqu' à 3000 V en fonction du tube utilisé. Le claquage du GDT entraine le claquage des bougies.

Selon une deuxième variante, le premier interrupteur s'ouvre quand la tension de sortie U devient supérieure ou égale à la tension de claquage U_{claquage} et un deuxième interrupteur disposé avant le circuit d'allumage à bougies, reste ouvert jusqu'à l'ordre de démarrage ou redémarrage moteur. Dans cette variante, la tension de consigne est la tension de claquage nécessaire, du GDT. On prévoit alors un deuxième interrupteur permettant d'isoler le circuit de génération de haute tension du BHE du circuit d'allumage des bougies pendant la phase de précharge. Le deuxième interrupteur, de type haute tension, placé en sortie du circuit de génération haute tension du BHE, avant le GDT, est naturellement ouvert et il est fermé sur activation de l'ordre de démarrage: la tension de sortie du BHE étant déjà au niveau de claquage requis (celle du tube à décharge de gaz), le BHE permet la production d'une étincelle dès que l'ordre de démarrage est reçu.

L'invention concerne également un dispositif d'allumage d'un moteur à combustion continue comprenant un boitier haute énergie, un circuit d'allumage à bougies et une électrovanne de carburant coopérant avec un démarreur, il est caractérisé en ce qu'il comprend un organe électronique de contrôle moteur configuré pour mettre en œuvre le procédé selon l'invention, relié à une sortie de tension U du boitier haute énergie et au premier interrupteur permettant l'alimentation du boitier haute énergie. Le circuit électronique permet ainsi le contrôle de l'ouverture et la fermeture de l'interrupteur et ainsi de commander et contrôler la charge du BHE.

Avantageusement, le boitier haute énergie est relié au circuit d'allumage par un deuxième interrupteur. Le deuxième interrupteur permet, sur ordre de démarrage, de commander l'allumage quand le BHE est à une tension U_{claquage}.

Avantageusement, le circuit électronique commande le deuxième interrupteur.

Avantageusement, l'organe électronique de contrôle du moteur comprend un circuit électronique spécifique propre au boitier haute énergie. Il est ainsi possible de mettre en œuvre le procédé sur un moteur existant sans devoir reconfigurer le calculateur de contrôle du moteur ou FADEC.

Avantageusement, le deuxième interrupteur est à l'état ouvert pendant l'étape de précharge et à l'état fermé au démarrage. L'interrupteur passe de l'état ouvert à l'état fermé sur ordre de démarrage ou redémarrage selon le cas.

L'invention porte également sur un turbomoteur comprenant le dispositif avec au moins une des caractéristiques précédentes, et un aéronef comprenant un tel turbomoteur. L'aéronef pourra, par exemple, être un hélicoptère.

### BREVE DESCRIPTION DES FIGURES

Les figures sont présentées à titre indicatif et nullement limitatif de l'invention.
[Fig. 1] est un logigramme de fonctionnement de l'allumage de l'état de la technique ;
[Fig. 2] est un chronogramme de fonctionnement de l'allumage d'un moteur en veille de l'état de la technique ;
[Fig. 3] est un logigramme de fonctionnement de l'allumage selon l'invention ;
[Fig. 4] est un chronogramme de fonctionnement de l'allumage d'un moteur en veille selon une première variante de l'invention avec précharge partielle;
[Fig. 5] est un chronogramme de fonctionnement de l'allumage d'un moteur en veille selon une deuxième variante de l'invention avec précharge totale;
[Fig. 6] est un schéma électrique d'un dispositif de commande du BHE selon la première variante de l'invention;
[Fig. 7] est un schéma électrique d'un dispositif de commande du BHE selon la deuxième variante de l'invention.

### DESCRIPTION DETAILLEE

Sauf précision contraire, un même élément apparaissant sur des figures différentes présente une référence unique.

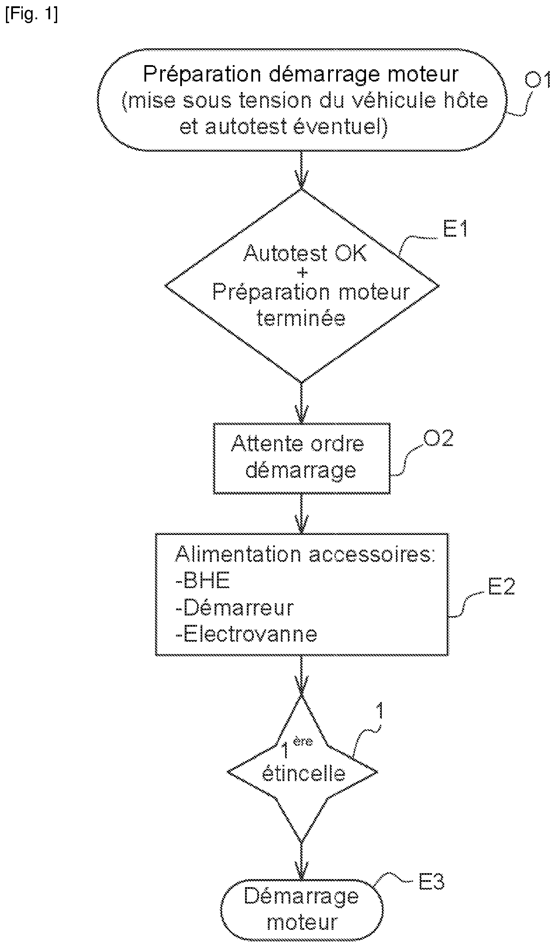

Un procédé d'allumage d'un moteur à combustion continue selon l'état de la technique est illustré à la figure 1. Lorsque le véhicule est mis sous tension O1, l'organe électronique de contrôle du moteur est mis sous tension, un autotest éventuel et une préparation du moteur sont faites E1, le véhicule est prêt à démarrer. Lorsque l'ordre de démarrage O2 est donné par le pilote ou l'organe électronique de contrôle du moteur, le BHE, l'ensemble des accessoires de démarrage, c'est-à-dire, le démarreur et l'électrovanne de carburant, sont alimentés en électricité E2, l'alimentation du BHE se fait à travers un interrupteur piloté directement par l'ordre de démarrage O2. À partir de cet instant, le convertisseur haute tension du BHE est alimenté par la basse tension DC du réseau électrique de bord, l'élément de stockage haute tension du BHE, typiquement un (des) condensateur(s), se charge(nt). La tension de sortie aux bornes de l'élément de stockage s'élève jusqu'à atteindre le niveau de tension de claquage requis créant une première étincelle 1. D'autres étincelles 1', 1" se produisent sensiblement à la même fréquence, jusqu'au démarrage effectif du moteur E3.

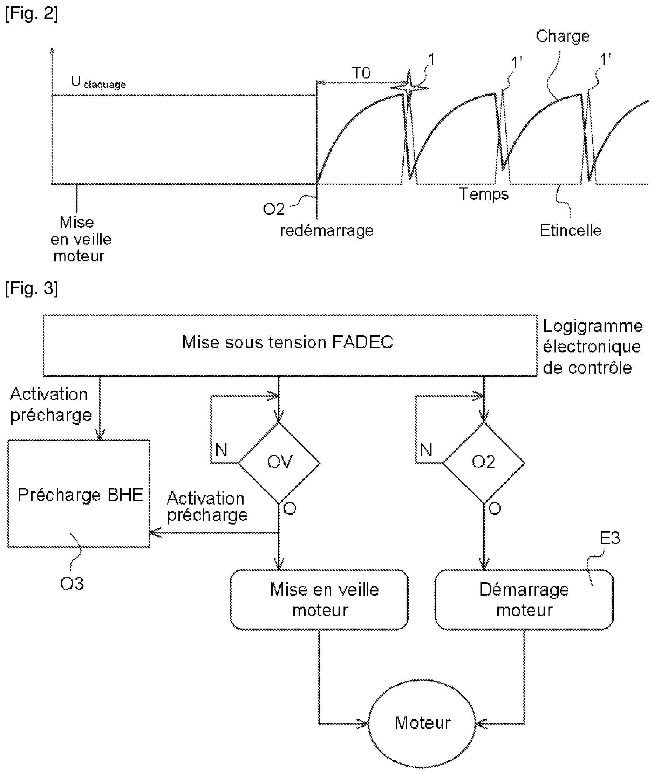

On peut ainsi voir sur la figure 2, le temps de charge T0 du BHE, qui correspond sensiblement au temps écoulé entre l'ordre de démarrage O2 et la création de la première étincelle. Ce temps de charge T0 est un paramètre caractéristique de l'électronique du BHE considéré. En pratique elle est fonction de la topologie et des performances et dispersions technologiques des composants du convertisseur haute tension. Les étincelles suivantes 1', 1" arrivent à une fréquence qui correspond à ce temps de charge T0 du BHE.

La séquence temporelle de charge du BHE pour claquer les étincelles se retrouve en cas de redémarrage du moteur lorsque celui-ci a été mis en état dit de veille, par un ordre de veille dans une phase de vol de l'aéronef. La possibilité de mettre un des moteurs d'un aéronef en état de veille est notamment utilisée pour réduire la consommation et l'empreinte carbone de l'aéronef. Dans cet état de veille, l'électrovanne de carburant est coupée, les autres conditions de démarrage (débit et pression d'air dans la chambre de combustion) étant conservées, le démarreur étant notamment toujours sous tension et piloté de manière à maintenir la vitesse du générateur de gaz du turbomoteur dans la fenêtre d'allumage optimale de la chambre de combustion. Dans cet état, il est possible sur ordre de démarrage O2 du pilote ou de l'organe électronique de contrôle du moteur, de rallumer la combustion et de monter rapidement en puissance. Autrement dit, redémarrer le moteur en veille, nécessite de réalimenter en carburant et réactiver l'étincelage. On retrouve ainsi la séquence temporelle décrite en relation avec les figures 1 et 2, d'alimentation du BHE à travers l'interrupteur directement piloté par l'ordre de démarrage pour obtenir la tension de claquage des bougies. Le temps nécessaire à rallumer le moteur dépend alors principalement du temps de charge incompressible du BHE.

Dans les différentes figures illustrant l'invention, on a représenté un BHE pour 2 bougies, mais cela pourrait être pour 1, 2, ..., n bougies.

Le procédé selon l'invention illustré figure 3 prévoit que la mise sous tension de l'organe électronique de contrôle du moteur ou le passage en mode de veille du moteur sur ordre de mise en veille OV déclenche une mise sous tension du BHE permettant une précharge O3 au moins partielle du BHE et un maintien de cette précharge tout le temps de veille du moteur ou de mise en pression de la chambre de combustion. Lorsqu'un ordre de démarrage O2 est reçu, le temps de charge restant du BHE est significativement réduit, permettant d'accélérer la survenue de la première étincelle et donc le démarrage du moteur.

Ainsi pour un premier démarrage, le procédé s'applique de manière suivante : la mise sous tension du BHE est commandée par la mise sous tension de l'électronique de contrôle du moteur (calculateur du moteur ou par un circuit électronique spécifique au BHE), permettant une précharge O3 au moins partielle du BHE avant l'ordre de démarrage moteur O2. En particulier, dans ce cas, le BHE est alimenté avant le démarreur et l'électrovanne de carburant.

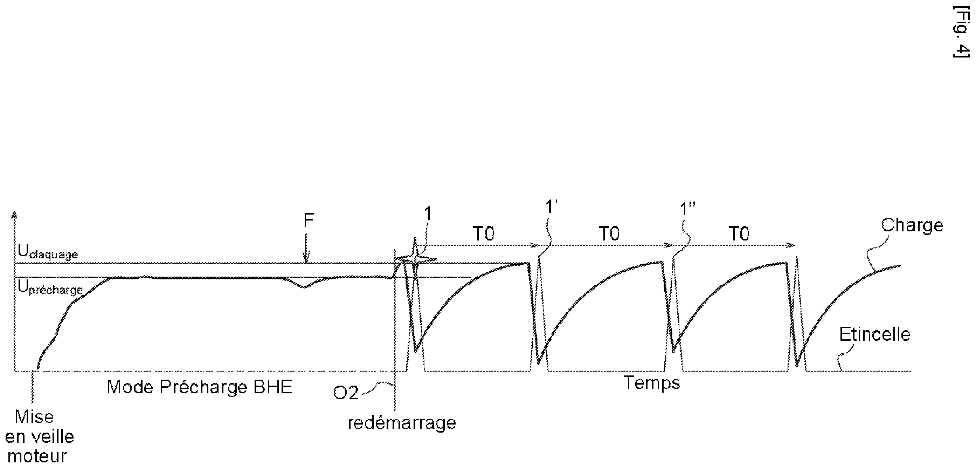

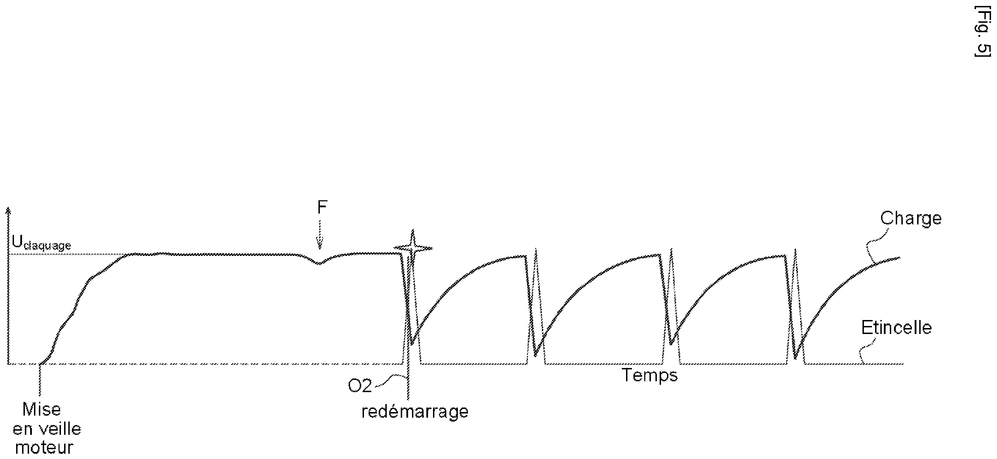

Les chronogrammes des figures 4 et 5 illustrent le gain de temps permis par le procédé de l'invention dans la séquence temporelle de démarrage d'un moteur passé en mode de veille, avec une phase de précharge déclenchée par l'ordre de mise en veille OV du moteur : la première étincelle 1 arrive très peu de temps après l'ordre de démarrage O2. Après cette 1^{ère} étincelle, les étincelles suivantes 1', 1" claquent à la même fréquence que dans l'état de la technique, correspondant au temps de charge T0 du BHE après chaque étincelle.

La figure 4 correspond à une première variante de mise en œuvre de l'invention correspondant à une précharge partielle du BHE pendant une phase de précharge avant l'ordre de démarrage O2.

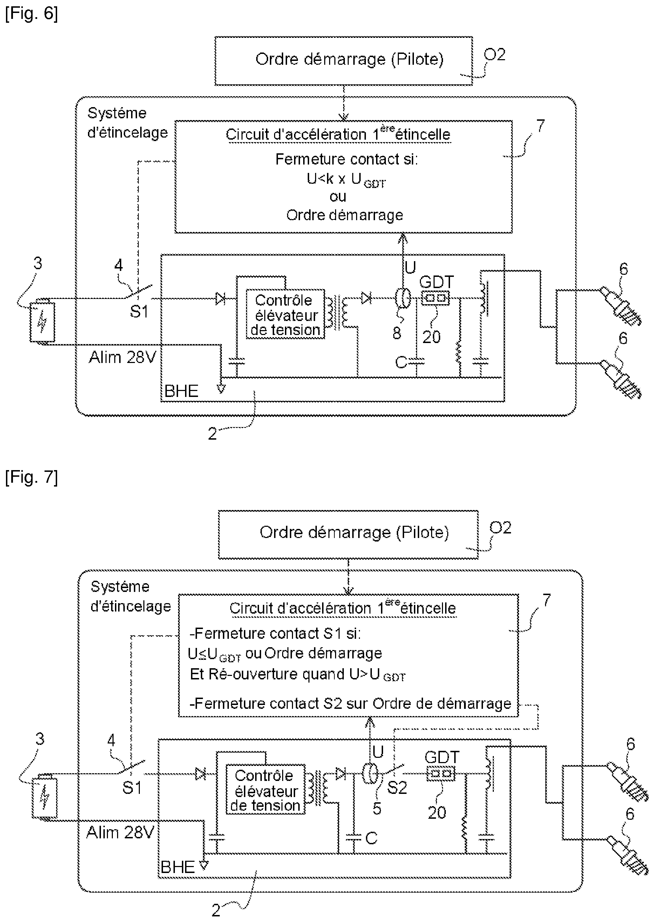

Un dispositif de commande correspondant du BHE est illustré figure 6.

Le BHE 2 comprend de manière conventionnelle un étage élévateur de tension chargeant un élément de stockage capacitif figuré par une capacité C, un tube de décharge à gaz 20 et un étage de sortie de puissance qui fournit la haute tension appliquée sur les électrodes des bougies. L'entrée d'alimentation du BHE 2 est reliée à une alimentation électrique 3 (typiquement le réseau électrique basse tension DC de l'aéronef ou du véhicule) par un premier interrupteur 4, basse tension, qui est naturellement à l'état ouvert; la sortie en tension U du BHE 2 est mesurée aux bornes de la capacité C, à l'entrée du tube de décharge à gaz 20. Si des pertes de tensions F se produisent, le dispositif surveille la tension U de façon à l'asservir à la valeur k x U.

Dans le cas de systèmes de moteur à combustion continue ou de systèmes à combustion continue (chauffe-eau, chaudière, ...) pour lesquels les conditions atmosphériques ne sont pas critiques et qui utiliseraient un BHE sans tube de décharge à gaz, la haute tension appliquée sur les bougies est celle fournie aux bornes de l'élément de stockage du BHE. Le fonctionnement est tout à fait similaire : l'entrée d'alimentation du BHE 2 est reliée à une alimentation électrique 3 (typiquement le réseau électrique basse tension DC du système) par le premier interrupteur 4, basse tension, qui est naturellement à l'état ouvert ; la sortie en tension U du BHE 2 est mesurée aux bornes de l'élément de stockage capacitif, correspondant dans ce cas à la sortie du BHE (avant les bougies 6 du circuit d'allumage).

Selon l'invention, le niveau de la tension de sortie U du BHE 2 est mesuré par un capteur 8 et est contrôlé par un organe électronique de contrôle du moteur 7 qui pilote et contrôle la charge du BHE en commandant de manière appropriée l'ouverture et la fermeture du premier interrupteur 4.

Dès que l'électronique du moteur est mise sous tension, l'organe électronique de contrôle du moteur 7 est en mesure de placer le BHE en mode de précharge à une tension de consigne. L'organe électronique de contrôle du moteur 7 est configuré pour mesurer la tension de sortie U du BHE, typiquement au moyen du capteur 8 et la comparer à une tension de consigne U_{précharge}, qui est fixée à un niveau proche mais inférieur au niveau de tension de seuil de claquage requis, U_{claquage}. Le niveau de tension de seuil de claquage requis est le niveau de tension minimum qui permet aux bougies de provoquer une étincelle dans la chambre de combustion, les autres conditions de carburant et d'air comprimé étant par ailleurs réunies.

Tant que la tension U est inférieure à la tension de consigne, l'organe électronique de contrôle du moteur 7 pilote le premier interrupteur à l'état fermé; dès que le niveau de tension de consigne est atteint, il pilote le premier interrupteur 4 à l'état ouvert.

Si pendant la durée du mode de précharge, la tension de sortie venait à baisser (par exemple en raison des pertes dans l'étage de stockage capacitif haute tension) F, l'organe électronique de contrôle du moteur 7 est apte à réactiver la charge partielle du BHE en commutant à nouveau le premier interrupteur 4 à l'état fermé. En pratique, cette situation concerne plutôt le cas d'un moteur mis en phase de veille, qui peut durer une heure et plus.

Dans cette première variante, la précharge de la tension de sortie du BHE 2 pilotée par l'organe électronique de contrôle du moteur 7, est partielle.

Lorsqu'il reçoit l'ordre de démarrage O2, l'organe électronique de contrôle du moteur 7 sort du mode de commande de précharge O3 du BHE pour passer en mode de commande opérationnelle du BHE permettant le claquage des étincelles. Dans ce mode, le premier interrupteur 4 est commandé ou maintenu à l'état fermé pour alimenter le BHE 2.

Comme illustré sur la figure 4, l'écart de tension (U_{claquage} - U_{précharge}) à combler pour atteindre la tension de claquage permettant le claquage de la première étincelle étant faible, le temps de charge complémentaire t0 du BHE à compter de la réception de l'ordre de démarrage O2, pour passer du niveau U_{précharge} au niveau U_{claquage} est bref comparé au temps de charge T0 correspondant à l'excursion complète, de zéro volt à U_{claquage}. Dès que cette tension de claquage est atteinte, la première étincelle se produit. Les étincelles suivantes se produisent successivement à la même fréquence, correspondant au temps de charge T0.

En pratique, on montre que l'on peut ainsi gagner de 0,4 à 0,45s en temps de charge à compter de la réception de l'ordre de démarrage, soit un gain de 80 à 90 % sur le temps de production de la première étincelle par rapport au procédé d'allumage conventionnel. Ce gain est précieux dans certaines situations opérationnelles critiques, dans le contexte d'aéronef disposant de plusieurs moteurs et conçus pour permettre le passage en mode veille d'au moins un des moteurs dans certaines phases de vol, pour économiser du carburant et réduire leur empreinte carbone. Comme déjà expliqué, il faut pouvoir en cas d'urgence (conditions climatiques, défaillance d'un moteur, ...) rallumer et remettre en puissance ce ou ces moteurs et cela très rapidement.

La synchronisation des différentes conditions d'allumage dans la chambre de combustion : carburant, air comprimé, étincelle (bougies) est également facilitée. Le démarrage moteur (premier démarrage) devient ainsi plus fiable.

Une deuxième variante de mise en œuvre de l'invention est illustrée sur la figure 5, correspondant à une tension de consigne égale à la tension de claquage. L'organe électronique de contrôle du moteur 7 est alors configuré pour commander une précharge O3 du BHE « totale ». C'est à dire que l'organe électronique de contrôle du moteur 7 compare la tension de sortie U du BHE à un niveau de tension qui est le niveau de tension de seuil de claquage requis U_{claquage}.

Un deuxième interrupteur 5, de type haute tension, est alors prévu en sortie du BHE 2, de manière à isoler le circuit de génération et stockage de la haute tension du BHE 2 du circuit d'allumage des bougies 6 pendant le mode de précharge, avant un ordre de démarrage O2 du pilote. Ce deuxième interrupteur 5 est naturellement à l'état ouvert et reste ouvert en mode de précharge du BHE. Il est commandé par le l'organe électronique de contrôle du moteur 7 à l'état fermé dès qu'un signal d'ordre de démarrage O2 du pilote est reçu, jusqu'à allumage du moteur.

Pour le cas où le mode de précharge du BHE selon l'invention est utilisé pour un premier démarrage moteur, la synchronisation des conditions d'allumage est facilitée par la présence de ce deuxième interrupteur 5, alors que le BHE est préchargé à la tension de claquage nécessaire : le deuxième interrupteur 5 permet de maîtriser le moment où on fournit la tension de claquage aux bougies 6, le temps de commutation du deuxième interrupteur étant négligeable.

## Revendications

1. Procédé d'allumage d'un moteur à combustion continue comprenant un organe électronique de contrôle du moteur (7), un boitier haute énergie (2), un circuit d'allumage à bougies et une électrovanne de carburant, coopérant avec un démarreur, ledit procédé étant **caractérisé en ce qu'**il est mis en œuvre par l'organe électronique de contrôle du moteur (7) et qu'il comporte une étape précharge (O3) du boitier haute énergie (2) avant une étape de démarrage moteur (E3), activée sur ordre de démarrage moteur (O2), ladite étape de précharge (O3) étant commandée :
- par une mise sous tension de l'organe électronique de contrôle du moteur (7), ou
- sur mise en veille du moteur (OV) dans lequel le démarreur reste sous tension, le générateur de gaz est maintenu en rotation à basse vitesse grâce au démarreur et l'électrovanne de carburant est fermée.

2. Procédé selon la revendication 1, **caractérisé en ce que** l'étape de précharge (O3) comprend une mesure d'une tension de sortie (U) du boitier haute énergie (2) et une commande d'ouverture ou de fermeture d'un premier interrupteur (4) contrôlant l'alimentation du boitier haute énergie en fonction de la tension de sortie U du boitier haute énergie (2).

3. Procédé selon la revendication 2, **caractérisé en ce que** le premier interrupteur (4) s'ouvre quand la tension de sortie U devient supérieure ou égale à une tension de consigne U_{précharge} strictement inférieure à une tension de claquage U_{claquage}, celle-ci étant la tension nécessaire pour produire une étincelle.

4. Procédé selon la revendication 2, **caractérisé en ce que** le premier interrupteur (4) s'ouvre quand la tension de sortie U devient supérieure ou égale à la tension de claquage U_{claquage} , U_{claquage} étant la tension nécessaire pour produire une étincelle, et qu'un deuxième interrupteur (5) disposé avant le circuit d'allumage à bougies (6), reste ouvert jusqu'à un ordre de démarrage (O2).

5. Dispositif d'allumage d'un moteur à combustion continue comprenant un boitier haute énergie (2), un circuit d'allumage à bougies (6), et une électrovanne de carburant, coopérant avec un démarreur, **caractérisé en ce qu'**il comprend un organe électronique de contrôle du moteur (7) configuré pour mettre en œuvre le procédé selon une des revendications 1 à 4, relié à une sortie de tension (U) du boitier haute énergie (2) et au premier interrupteur (4) permettant l'alimentation du boitier haute énergie (2).

6. Dispositif d'allumage selon la revendication 5, **caractérisé en ce que** le boitier haute énergie (2) est relié au circuit d'allumage à bougies (6) par un deuxième interrupteur (5).

7. Dispositif d'allumage selon la revendication 6, **caractérisé en ce que** l'organe électronique de contrôle du moteur (7) commande le deuxième interrupteur (5).

8. Dispositif d'allumage selon l'une des revendications 5 à 7, **caractérisé en ce que** l'organe électronique de contrôle du moteur (7) comprend un circuit électronique spécifique propre au boitier haute énergie.

9. Dispositif d'allumage selon l'une des revendications 5 à 8, **caractérisé en ce que** le deuxième interrupteur (5) est à l'état ouvert pendant l'étape de précharge et à l'état fermé au démarrage.

10. Turbomoteur comprenant le dispositif selon une des revendications 5 à 9.

11. Aéronef comprenant un turbomoteur selon la revendication 10.

## Patentansprüche

1. Verfahren zum Zünden eines Verbrennungsmotors mit kontinuierlicher Verbrennung, umfassend eine elektronische Motorsteuerung (7), einen Hochenergiebehälter (2), einen Zündkreis mit Zündkerzen und ein Kraftstoffmagnetventil, das mit einem Anlasser zusammenwirkt, wobei das Verfahren **dadurch gekennzeichnet ist, dass** es von der elektronischen Motorsteuerung (7) ausgeführt wird und einen Vorladeschritt (O3) des Hochenergiebehälters (2) vor einem Motorstartschritt (E3) umfasst, der durch einen Motorstartbefehl (O2) aktiviert wird, wobei der Vorladeschritt (O3) gesteuert wird:
- durch Einschalten der elektronischen Motorsteuerung (7) oder
- durch den Standby-Modus des Motors (OV), bei dem der Anlasser unter Spannung bleibt, der Gasgenerator sich dank des Anlassers bei geringer Geschwindigkeit weiterdreht und das Kraftstoffmagnetventil geschlossen ist.

2. Verfahren nach Anspruch 1, **dadurch gekennzeichnet, dass** der Vorladeschritt (O3) eine Messung einer Ausgangsspannung (U) des Hochenergiebehälters (2) und eine Steuerung zum Öffnen oder Schließen eines ersten Schalters (4) umfasst, der die Stromversorgung des Hochenergiebehälters in Abhängigkeit von der Ausgangsspannung U des Hochenergiebehälters (2) steuert.

3. Verfahren nach Anspruch 2, **dadurch gekennzeichnet, dass** der erste Schalter (4) öffnet, wenn die Ausgangsspannung U größer oder gleich einer Sollspannung U_{Vorladung} wird, die streng kleiner ist als eine Durchschlagspannung U_{Durchschlag}, wobei diese die zur Erzeugung eines Funkens erforderliche Spannung ist.

4. Verfahren nach Anspruch 2, **dadurch gekennzeichnet, dass** der erste Schalter (4) öffnet, wenn die Ausgangsspannung U größer oder gleich der Durchschlagspannung U_{Durchschlag} wird, wobei U_{Durchschlag} die zur Erzeugung eines Funkens erforderliche Spannung ist, und dass ein zweiter Schalter (5), der vor dem Zündkerzenzündkreis (6) angeordnet ist, bis zu einem Startbefehl (O2) geöffnet bleibt.

5. Zündvorrichtung für einen Verbrennungsmotor mit einem Hochenergiebehälter (2), einem Zündkerzenzündkreis (6) und einem Kraftstoffmagnetventil, die mit einem Anlasser zusammenwirkt, **dadurch gekennzeichnet, dass** sie ein elektronisches Motorsteuerungsbauteil (7) umfasst, das so gestaltet ist, dass es das Verfahren gemäß einem der Ansprüche 1 bis 4 umsetzt und mit einem Spannungsausgang (U) des Hochenergiebehälters (2) und dem ersten Schalter (4) verbunden ist, der die Stromversorgung des Hochenergiebehälters (2) ermöglicht.

6. Zündvorrichtung nach Anspruch 5, **dadurch gekennzeichnet, dass** der Hochenergiebehälter (2) über einen zweiten Schalter (5) mit dem Zündkerzenzündkreis (6) verbunden ist.

7. Zündvorrichtung nach Anspruch 6, **dadurch gekennzeichnet, dass** die elektronische Motorsteuerung (7) den zweiten Schalter (5) steuert.

8. Zündvorrichtung nach einem der Ansprüche 5 bis 7, **dadurch gekennzeichnet, dass** die elektronische Motorsteuerung (7) eine für den Hochenergiebehälter spezifische elektronische Schaltung umfasst.

9. Zündvorrichtung nach einem der Ansprüche 5 bis 8, **dadurch gekennzeichnet, dass** der zweite Schalter (5) während der Vorladephase offen und beim Start geschlossen ist.

10. Turbomotor mit der Vorrichtung nach einem der Ansprüche 5 bis 9.

11. Flugzeug mit einem Turbomotor gemäß Anspruch 10.

## Claims

1. A method for igniting a continuous combustion engine comprising an electronic engine control member (7), a high energy box (2), a spark plug ignition circuit and a fuel solenoid valve, cooperating with a starter motor, said method being **characterised in that** it is implemented by the electronic engine control member (7) and that it includes a step (O3) of precharging the high energy box (2) before an engine starting step (E3), activated on an engine starting command (O2), said precharging step (O3) being controlled :
- by switching on the electronic engine control member (7), or
- by putting the engine in idle mode (OV), wherein the starter motor is kept on, the gas generator is kept rotating at low speed by virtue of the starter motor and the fuel solenoid valve is closed.

2. The method according to claim 1, **characterised in that** the precharging step (O3) comprises a measurement of an output voltage (U) of the high energy box (2) and a command to open or close a first switch (4) controlling the power supply to the high energy box as a function of the output voltage U of the high energy box (2).

3. The method according to claim 2, **characterised in that** the first switch (4) opens when the output voltage U becomes greater than or equal to a voltage set-point U_{precharging} strictly lower than a breakdown voltage U_{breakdown}, the latter being the voltage required to produce a spark.

4. The method according to claim 2, **characterised in that** the first switch (4) opens when the output voltage U becomes greater than or equal to the breakdown voltage U_{breakdown}, U_{breakdown} being the voltage necessary to produce a spark, and that a second switch (5) disposed before the spark plug ignition circuit (6) remains open until a start command (O2).

5. A device for igniting a continuous combustion engine comprising a high energy box (2), a spark plug ignition circuit (6), and a fuel solenoid valve, cooperating with a starter motor, **characterised in that** it comprises an electronic engine control member (7) configurated for implement the method according to one of claims 2 to 4, connected to a voltage output (U) of the high energy box (2) and to the first switch (4) allowing the high energy box (2) to be supplied.

6. The ignition device according to claim 5, **characterised in that** the high energy box (2) is connected to the spark plug ignition circuit (6) via a second switch (5).

7. The ignition device according to claim 6, **characterised in that** the electronic engine control member (7) controls the second switch (5).

8. The ignition device according to one of claims 5 to 7, **characterised in that** the electronic engine control member (7) comprises a specific electronic circuit peculiar to the high energy box.

9. The ignition device according to one of claims 6 to 8, **characterised in that** the second switch (5) is in the open state during the precharging step and in the closed state at start-up.

10. A turboshaft engine comprising the device according to one of claims 5 to 9.

11. An aircraft comprising a turboshaft engine according to claim 10.
